# EUROPÄISCHE PATENTSCHRIFT

(11) **EP 2 173 580 B1**
(45) Veröffentlichungstag und Bekanntmachung des Hinweises auf die Patenterteilung: **09.03.2016**
(21) Anmeldenummer: 08775021.2
(22) Anmeldetag: 11.07.2008
(51) Int. Cl.: B60N 2/56

(54) **LAUFZEITVERHALTEN EINES VENTILATORS FÜR EINEN AKTIVEN KLIMASITZ**
RUN TIME BEHAVIOR OF A VENTILATOR FOR AN ACTIVE CLIMATE-CONTROLLED SEAT
COMPORTEMENT DE DURÉE DE FONCTIONNEMENT D'UN VENTILATEUR POUR UN SIÈGE CLIMATISÉ ACTIF

(30) Priorität: 25.07.2007 DE 102007035373
(43) Veröffentlichungstag der Anmeldung: 14.04.2010
(73) Patentinhaber: Volkswagen AG, 38440 Wolfsburg (DE)
(72) Erfinder: ETZMUSS, Heinz, 30926 Seelze (DE); WILHELM, Bernd, Prof. Dr., 38110 Braunschweig (DE); KAISER, Hans-Georg, Dr., 97645 Ostheim vor der Rhön (DE); BARKOW, Tomas, 38102 Braunschweig (DE)
(74) Vertreter: Gulde & Partner
(86) Internationale Anmeldenummer: PCT/EP2008/059104
(87) Internationale Veröffentlichungsnummer: WO 2009/013156

(56) Entgegenhaltungen:
- DE-C1- 19 628 698
- DE-C1- 19 842 979

## Beschreibung

Die Erfindung betrifft das Laufzeitverhalten eines Ventilators eines aktiven Klimasitzes.

Die DE 198 42 979 beschreibt einen klimatisierten Fahrzeugsitz mit einem Polster, einer in dem Polster integrierten Sitzheizung, einer Belüftungsvorrichtung zum flächenhaften Durchlüften des Polsters und einem Steuergerät zum Steuern von Sitzheizung und Belüftungsvorrichtung. Zwecks Verkürzung der Ansprechzeit der Sitzheizung beim Einschalten aktiviert das Steuergerät mit jedem Einschalten der Sitzheizung die Belüftungsvorrichtung, wobei vorzugsweise der das Einschalten der Sitzheizung bewirkende Steuervorgang im Steuergerät so ausgelegt ist, dass Sitzheizung und Belüftungsvorrichtung mit voller Leistung eingeschaltet werden und die Leistung der Belüftungsvorrichtung innerhalb eines vorgegebenen Zeitintervalls asymptotisch auf einen vorgegebenen Endwert reduziert wird.

Ein weiterer klimatisierter Sitz ist aus der DE 202 19 733 U1 bekannt. Bei diesem Sitz ist ein Lüfter, zum Beispiel ein Radiallüfter, unterhalb der Sitzfläche - beabstandet zu dieser - angeordnet. Über einen Durchtrittsbereich unterhalb des Sitzes wird Luft in eine Luftverteilereinrichtung im Sitzpolster transportiert, die eine Luftverteilungsstruktur an der Unterseite der Sitzfläche, Luftführungskanäle und Luftaustrittsöffnungen auf der Oberseite der Sitzfläche umfasst.

Für die aktiven Klimasitze sind zur Ansteuerung zwei grundsätzliche Vorgehensweisen bekannt.

In einer ersten Vorgehensweise existiert beispielweise nur eine Ein/Aus-Funktion über einen Taster, wonach der entsprechende Ventilator im aktiven Klimasitz ein- beziehungsweise ausgeschaltet wird und während seiner Laufzeit eine bestimmte Drehzahl aufweist.

Zweitens existiert statt des Ein/Aus-Tasters eine Art Drehzahlregelungselement mit den Bedienstufen 0, 1, 2, 3, 4 und 5, wobei 0 die Position Aus und 5 der höchsten Drehzahl des Ventilators des Klimasitzes entspricht.

Der Erfindung liegt die Aufgabe zugrunde, die Einstellungsmöglichkeiten jedoch zu Gunsten des Komforts des Nutzers zu verändern.

Die Aufgabe wird in Verbindung mit den Merkmalen des Oberbegriffs des Patentanspruchs 1 in einer ersten Ausführungsform dadurch gelöst, dass bei Vorhandensein eines einfachen Ein/Aus-Schalters das zeitliche Ende einer bestimmbaren Gesamtlaufzeit durch automatische Ansteuerung des Ventilators in einer festgelegten Drehzahl nach einem vorgebbaren zweiten Laufzeitraum oder in einer zweiten Ausführungsform eine Drehzahlregelung des Ventilators in Abhängigkeit der Ansaugtemperatur des Ventilators und das zeitliche Ende taus der bestimmbaren Gesamtlaufzeit durch automatische Ansteuerung des Ventilators nach einem vorgebbaren zweiten Laufzeitraum realisierbar ist.

Das heißt, das zeitliche Ende der bestimmbaren Gesamtlaufzeit des Ventilators ist steuerbar,
- durch automatische Ausschaltung des Ventilators aus einer festgelegten maximalen Drehzahl nach dem vorgebbaren zweiten Laufzeitraum zu einem zweiten Zeitpunkt (erste Ausführungsform) oder
- durch automatische Ausschaltung des Ventilators aus einer ansaugtemperaturabhängigen Drehzahl nach dem vorgebbaren zweiten Laufzeitraum zu einem zweiten Zeitpunkt, die während des Anlaufzeitraumes des Ventilators in Abhängigkeit der Ansaugtemperatur des Ventilators durch eine Drehzahlregelung erreicht wird (zweite Ausführungsform).

Die Aufgabe der Erfindung wird ferner in Verbindung mit den Merkmalen des Oberbegriffs des Patentanspruchs 2 dadurch gelöst, dass bei Vorhandensein eines einfachen Ein/Aus-Schalters in einer dritten Ausführungsform innerhalb der bestimmbaren Gesamtlaufzeit aus einer festgelegten Drehzahl eine automatische Reduzierung auf eine vorgebbare Drehzahl erfolgt, wonach das zeitliche Ende manuell oder automatisch durch Ansteuerung des Ventilators zu einem vierten Zeitpunkt realisierbar ist.

Das heißt, das zeitliche Ende der bestimmbaren Gesamtlaufzeit des Ventilators ist steuerbar,
- durch manuelle oder automatische Ausschaltung des Ventilators zu einem vierten Zeitpunkt aus einer reduzierten Drehzahl nach dem vierten Laufzeitraum, die in dem Reduzierungszeitraum aus einer für den zweiten Laufzeitraum festgelegten maximalen Drehzahl auf die vorgebbare Drehzahl im vierten Laufzeitraum durch eine Drehzahlregelung reduziert worden ist (dritte Ausführungsform).

Die Aufgabe der Erfindung wird ferner in Verbindung mit den Merkmalen des Oberbegriffs des Patentanspruchs 2 dadurch gelöst, dass bei Vorhandensein eines einfachen Ein/Aus-Schalters in einer vierten Ausführungsform innerhalb der bestimmbaren Gesamtlaufzeit die Drehzahlregelung des Ventilators in Abhängigkeit der Ansaugtemperatur des Ventilators und durch automatische Ansteuerung des Ventilators realisiert wird und anschließend zunächst eine automatische Reduzierung auf eine vorgebbare Drehzahl erfolgt, wonach das zeitliche Ende manuell oder automatisch durch Ansteuerung des Ventilators zu einem späteren, vierten Zeitpunkt realisierbar ist.

Das heißt, das zeitliche Ende der bestimmbaren Gesamtlaufzeit ist steuerbar,
- durch manuelle oder automatische Ausschaltung des Ventilators zu einem vierten Zeitpunkt aus einer ansaugtemperaturabhängigen Drehzahl nach dem vierten Laufzeitraum, die in dem Reduzierungszeitraum aus einer in dem zweiten Laufzeitraum des Ventilators in Abhängigkeit der Ansaugtemperatur des Ventilators temperaturabhängig erreichten Drehzahl durch eine Drehzahlregelung auf die vorgebbare Drehzahl reduziert worden ist (vierte Ausführungsform).

Die Aufgabe der Erfindung wird weiterhin in Verbindung mit den Merkmalen des Oberbegriffs des Patentanspruchs 3 dadurch gelöst, dass bei Vorhandensein eines als Ein/Aus-Schalter dienenden und die Drehzahl vorwählbaren Drehzahlregelungselementes in einer fünften Ausführungsform innerhalb der bestimmbaren Gesamtlaufzeit die Drehzahlregelung des Ventilators in Abhängigkeit der Ansaugtemperatur des Ventilators und ebenfalls in Abhängigkeit der Ansaugtemperatur des Ventilators eine automatische Festlegung der Länge eines zweiten Laufzeitraumes erfolgt und wie bei der dritten Ausführungsform nach diesem zweiten Laufzeitraum durch automatische Ansteuerung des Ventilators anschließend zunächst eine automatische Reduzierung auf eine vorgebbare Drehzahl erfolgt, wonach das zeitliche Ende der bestimmbaren Gesamtlaufzeit manuell oder automatisch durch Ansteuerung des Ventilators zu einem vierten Zeitpunkt realisierbar ist. Das heißt, das zeitliche Ende der bestimmbaren Gesamtlaufzeit ist steuerbar,
- durch manuelle oder automatische Ausschaltung des Ventilators zu einem vierten Zeitpunkt aus einer vorgebbaren automatisch reduzierten Drehzahl nach dem vierten Laufzeitraum, die in dem Reduzierungszeitraum in Abhängigkeit der Ansaugtemperatur des Ventilators und nach einer ebenfalls in Abhängigkeit der Ansaugtemperatur des Ventilators für den zweiten Laufzeitraum automatisch festgelegten Länge durch eine Drehzahlregelung bereits auf die vorgebbare Drehzahl automatisch reduziert worden ist (fünfte Ausführungsform).

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: a) ein Laufzeitverhaltens-Diagramm mit einem automatischen Abschalten des Ventilators aus der maximalen Ventilatordrehzahl nach einer Zeit t2 [erste Ausführungsform], b) ein baufzeitverhaltens-Diagramm mit einem automatischen Abschalten des Ventilators aus einer ansaugtemperaturabhängigen Ventilatordrehzahl nach einer Zeit t2 [zweite Ausführungsform];

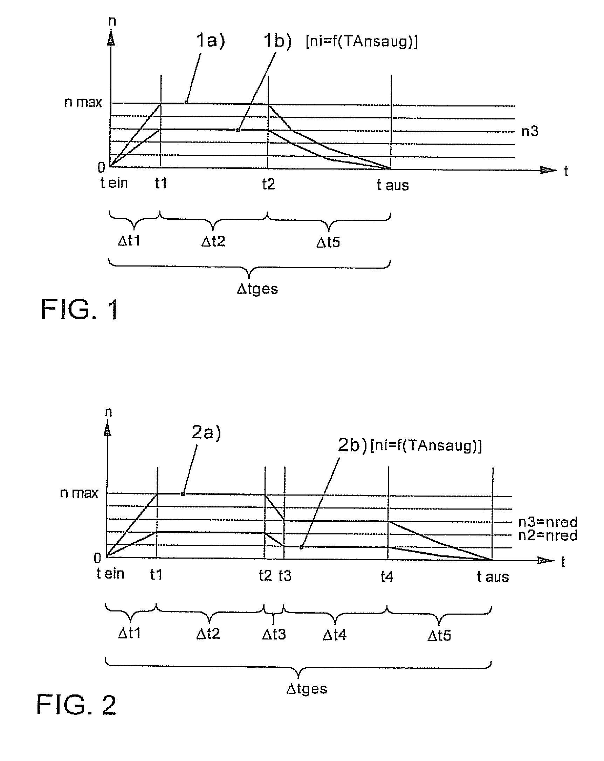

- Figur 2: a) ein Laufzeitverhaltens-Diagramm mit einer automatischen Drehzahlregelung des Ventilators in Abhängigkeit einer höheren Ansaugtemperatur des Ventilators und automatischer Reduzierung der Drehzahl des Ventilators mit anschließender manueller und/oder automatischer Abschaltung nach einer Zeit t4 [dritte Ausführungsform]; b) ein Laufzeitverhaltens-Diagramm mit einer automatischen Drehzahlregelung des Ventilators in Abhängigkeit einer niedrigeren Ansaugtemperatur des Ventilators und automatischer Reduzierung der Drehzahl des Ventilators mit anschließender manueller und/oder automatischer Abschaltung nach einer Zeit t4 [vierte Ausführungsform];
- Figur 3: ein Laufzeitverhaltens-Diagramm nach Figur 2, jedoch mit manueller Drehzahlvorwahl n und automatischer Steuerung der Drehzahl ni und/oder des Laufzeitraumes Δt2 in Abhängigkeit der Ansaugtemperatur bei geringer Ansaugtemperatur [fünfte Ausführungsform];
- Figur 4: ein Laufzeitverhaltens-Diagramm nach Figur 2, jedoch mit manueller Drehzahlvorwahl ni und automatischer Steuerung der Drehzahl ni und/oder des Laufzeitraumes Δt2 in Abhängigkeit der Ansaugtemperatur TAnsaug bei höherer Ansaugtemperatur TAnsaug [fünfte Ausführungsform];
- Figur 5: ein Laufzeitverhaltens-Diagramm anwendbar für Figur 1 bis 4 am Beispiel der Figur 1 mit einer Vorlaufzeit des Ventilators Δt0 bei Betätigung des Türkontaktes.

Bezüglich des Laufzeitverhaltens eines Ventilators unterscheidet die Erfindung darin, ob ein Ventilator für einen Klimasitz lediglich über einen Ein-/Aus-Schalter oder über ein als Ein-/Aus-Schalter dienendes und die Drehzahl ni vorwählbares Drehzahlregelungselement aufweist.

Im ersten Fall ist der Anwender also lediglich in der Lage, den Ventilator über den Schalter ein- beziehungsweise auszuschalten. Ein manueller Eingriff in die Drehzahl ni des Ventilators steht dem Anwender somit nicht zur Verfügung.

In dem zweiten Fall erfolgt das Einschalten über das Drehzahlregelungselement, wenn der Anwender ausgehend von einer Bedienstufe 0 (AUS) mindestens die Bedienstufe 1 (EIN) anwählt, wobei beispielsweise fünf Bedienstufen 1, 2, 3, 4 und 5 vorgegeben sein können, wobei der Zahl 5 die höchste Drehzahl ni des Ventilators zugeordnet ist.

Je nach Ausstattung des aktiven Schalters oder Drehzahlregelungselementes ergeben sich zur Steuerung des gesamten Laufzeitverhaltens ΔTges verschiedene Klimasitze beziehungsweise deren zugehörige Bedienelemente (Ein-/Aus- Ausführungsvarianten).

Die Figur 1 mit der Kennlinie 1 a zeigt zunächst ein Laufzeitverhaltendiagramm in einer ersten Ausführungsform mit einem automatischen Abschalten des Ventilators aus der maximalen Ventilatordrehzahl n max nach einer Zeit t2.

Die Figur 1 mit der Kennlinie 1b zeigt ein Laufzeitverhaltens-Diagramm mit einem automatischen Abschalten des Ventilators aus einer ansaugtemperaturabhängigen Ventilatordrehzahl n=3 ebenfalls nach einer Zeit t2.

Die Kennlinie 1a ergibt sich nach Einschalten an einem Einschaltzeitpunkt t1, wonach der Ventilator auf eine vorgegebene Drehzahl n max hochläuft, bis er den ersten Zeitpunkt t1 erreicht. Hierbei ist der Anlaufzeitraum Δt1 vergangen. Anschließend läuft der Ventilator im zweiten Laufzeitraum Δt2 in der Maximaldrehzahl n max, wonach er automatisch zum Zeitpunkt t2 ausgeschaltet wird, den Auslaufzeitraum Δt5 aufweist und zu einem Auszeitpunkt taus vollständig ausgelaufen ist.

Die Kennlinie 1 b zeigt in einer zweiten Ausführungsform einen anderen Verlauf. Beim Einschalten tein durch den Ein-/Aus-Schalter wird eine geringere Drehzahl ni im Anlaufzeitraum Δt1 bis zum Zeitpunkt t1 erreicht wird (beispielsweise n=3), da hier über die Steuerung eine Drehzahlregelung erfolgt, die von der Ansaugtemperatur TAnsaug abhängig ist.

Eine geringe Ansaugtemperatur TAnsaug führt dabei zu einer geringeren Drehzahl ni und eine höhere Ansaugtemperatur TAnsaug führt zu einer höheren Drehzahl ni.

Die Zeiträume Δt1, Δt2 beziehungsweise Δt5 der Kennlinie 1 b entsprechen der Kennlinie 1 a, können jedoch selbstverständlich in ihrer Länge unterschiedlich vorgegeben, das heißt programmiert sein.

In Figur 2 wird in einer dritten Ausführungsform anhand der Kennlinien 2a ein Laufzeitverhaltens-Diagramm mit einer automatischen Drehzahlregelung des Ventilators und automatischer Reduzierung der Drehzahl ni des Ventilators mit anschließender manueller oder automatischer Abschaltung nach einer vierten Zeit t4 gezeigt.

Nach Kennlinie 2b wird ein Laufzeitverhaltens-Diagramm in einer vierten Ausführungsform mit einer automatischen Drehzahlregelung des Ventilators in Abhängigkeit einer bestimmten Ansaugtemperatur TAnsaug des Ventilators und automatischer Reduzierung der Drehzahl ni des Ventilators mit anschließender manueller oder automatischer Abschaltung nach einem Laufzeitraum Δt4 gezeigt.

Die Kennlinie 2a entspricht im Wesentlichen der Kennlinie 1a, wobei der Unterschied darin besteht, dass nach einem zweiten Zeitpunkt t2 eine automatische Reduzierung der Drehzahl n max auf eine beispielhaft ausgewählte Drehzahl n=3 erfolgt, wonach sich ein vierter Laufzeitraum Δt4, ähnlich des zweiten Laufzeitraumes Δt2 der Figur 1a ergibt, der zum Zeitpunkt t4 über eine automatische oder manuelle Abschaltung zum Auslaufen des Ventilators taus nach einem Laufzeitraum Δt5 führt.

Die Kennlinie 2a ist beispielhaft für den Fall, dass lediglich ein Ein-/Aus-Schalter vorhanden ist und eine automatische Drehzahlregelung des Ventilators in Abhängigkeit einer Ansaugtemperatur nicht gegeben ist.

In dieser dritten Ausführungsform wird der Ventilator stets von der maximalen Drehzahl n max auf eine darunter liegende Drehzahl, beispielsweise n=3, reduziert.

Gemäß Figur 2, Kennlinie 2b kann, wie in der Kennlinie 2a innerhalb der Gesamtlaufzeit ΔTges eine Drehzahlregelung des Ventilators vorgesehen werden, die in Abhängigkeit der Ansaugtemperatur TAnsaug des Ventilators automatisch erfolgt, wobei anschließend zunächst eine automatische Reduzierung auf eine vorgebbare Drehzahl, hier beispielsweise n=1 erfolgt, wonach das zeitliche Auslaufen des Ventilators taus manuell oder automatisch durch Ansteuerung des Ventilators zu einem Zeitpunkt t4 realisierbar ist.

Auch für diese Kennlinie 2b gilt, dass nur ein einfacher Ein-/Aus-Schalter vorhanden ist und alle anderen Abläufe innerhalb der Kennlinie automatisch erfolgen oder das Ausschalten zum Zeitpunkt t4 manuell erfolgt.

Die Gesamtlaufzeit ΔTges der Kennlinie 2b ergibt sich somit aus der Anlaufzeit Δt1, die hinsichtlich des Gradienten temperaturabhängig gesteuert ist und in dieser vierten Ausführungsform temperaturabhängig nur eine beispielhafte Drehzahl von n=2 erreicht.

Innerhalb dieser Drehzahl n=2 ist ein vorgebbarer zweiter Laufzeitraum Δt2 im Steuergerät abgelegt, wonach zum zweiten Zeitpunkt t2 eine Reduzierung der Drehzahl ni auf eine beispielhafte Drehzahl von n=1 erfolgt.

Anschließend ist der vierte Laufzeitraum Δt4 vorgegeben und im Steuergerät abgelegt, wonach zum vierten Zeitpunkt t4 die automatische oder eben manuelle Abschaltung erfolgt und nach dem entsprechenden Auslaufzeitraum Δt5 der Ventilator des Klimasitzes zum Zeitpunkt taus wieder ausgelaufen ist.

Hinsichtlich der Temperaturabhängigkeit ni= f(T Ansaug) und der zugehörigen Drehzahl ni ist vorgesehen, dass eine geringere Ansaugtemperatur TAnsaug eine geringere Drehzahl ni im zweiten Laufzeitraum Δt2 ergibt und eine höhere Ansaugtemperatur TAnsaug eine höhere Drehzahl ni im zweiten Laufzeitraum Δt2 zur Folge hat. Diese dann automatisch gewählten Drehzahlen ni werden jeweils zum zweiten Zeitpunkt t2 entsprechend reduziert. Der Gradient der Reduzierung von t2 zu t3 und die zur Gestaltung der Kennlinie ist selbstverständlich wiederum im Steuergerät vorgebbar.

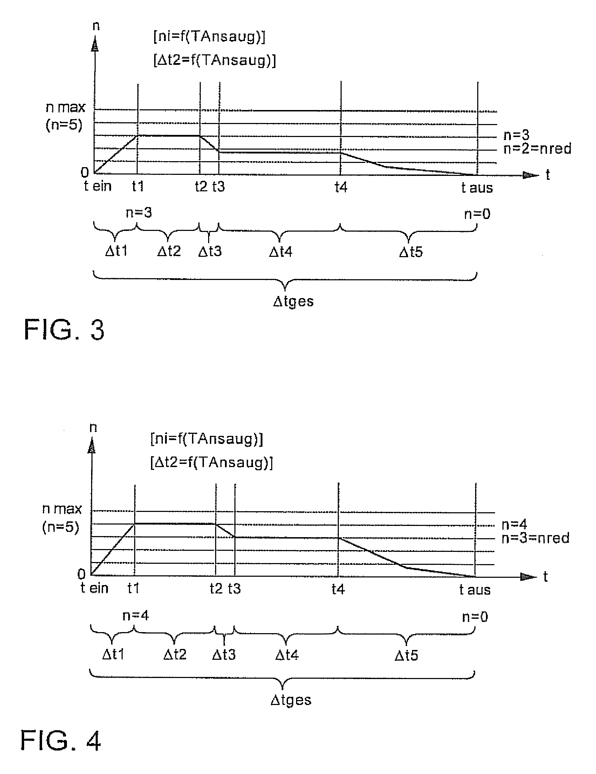

Die Figuren 3 und 4 zeigen eine fünfte Ausführungsform, bei der nicht nur wie bei Figur 2, Kennlinie 2b die Drehzahlregelung des Ventilators in Abhängigkeit der Ansaugtemperatur TAnsaug, sondern auch in Abhängigkeit der Ansaugtemperatur TAnsaug des Ventilators eine vorprogrammierbare, automatische Festlegung der Länge des zweiten Laufzeitraumes Δt2 erfolgt.

Insofern folgen die Figuren 3 und 4 zunächst dem Laufzeitverhalten gemäß Figur 2 Kennlinie 2b, andererseits ist jedoch ersichtlich, dass der zweite Laufzeitraum Δt2 in Figur 3 beziehungsweise der zweite Laufzeitraum Δt2 in Figur 4 zwischen den ersten und zweiten Zeitpunkten t1, t2 jeweils unterschiedliche Länge haben, wobei eine niedrigere Ansaugtemperatur TAnsaug zu einem kurzen Laufzeitraum Δt2 gemäß Figur 3 und eine höhere Ansaugtemperatur TAnsaug zu einem längeren Laufzeitraum Δt2 gemäß Figur 4 führt.

Ein weiterer Unterschied, der aus den Figuren nicht direkt zu entnehmen ist, besteht darin, dass hier nicht nur ein Ein-/Aus-Schalter zum Einsatz kommt, sondern ein die Drehzahl ni vorwählbares Drehzahlregelungselement vorgesehen ist, welches in seiner Nullstellung gleichzeitig als Ein-/Aus-Schalter dient.

Damit ergibt sich der folgende Effekt, dass sowohl die Länge des zweiten Laufzeitraumes Δt2 als auch die Drehzahl ni von der Ansaugtemperatur überlagert werden kann. So besteht zum Beispiel die Möglichkeit gemäß Figur 3, dass der Anwender eine Drehzahl n max wählt, jedoch die Ansaugtemperatur TAnsaug so niedrig ist, dass sowohl der Laufzeitraum Δt2 verkürzt wird, aber auch die Drehzahl auf beispielsweise n=3 gemäß Figur 3 reduziert wird.

Ein analoges Beispiel zeigt Figur 4, hier liegt jedoch die Ansaugtemperatur TAnsaug höher als in Figur 3 angenommen, so dass sich hier eine Drehzahl von beispielsweise n=4 und automatisch, vorprogrammierbar ein längerer Laufzeitraum Δt2 einstellt, die höher ist als die Drehzahl n=3 gemäß Figur 3.

Im umgekehrten Fall, dass nämlich der Anwender eine Drehzahl von n=1 wählt, wird selbstverständlich diese Drehzahl angefahren, auch wenn in Abhängigkeit der Ansaugtemperatur TAnsaug eine höhere Drehzahl ni im zweiten Laufzeitraum Δt2 fahrbar wäre. Diese Variante ist hier in den Figuren 3 und 4 nicht dargestellt.

Bei geringer Ansaugtemperatur TAnsaug hat diese Lösung den Effekt, dass ein kurzzeitiges Abkühlen des Klimasitzes erfolgt, wobei jedoch nach dieser Abkühlungsphase ein unangenehmer Effekt dadurch vermieden wird, dass der zweite Laufzeitraum Δt2 gemäß Figur 3 relativ kurz gewählt wird und anschließend sogar noch eine Reduzierung der Drehzahl ni im Reduzierungszeitraum Δt3 mit einem vorgebbaren Gradienten erfolgt. Anschließend kann dann wieder im vierten Laufzeitraum Δt4 eine Zeitspanne vorgegeben werden bis zu der die automatische Abschaltung des Ventilators erfolgt oder es besteht alternativ die Möglichkeit, den Ventilator manuell beispielsweise zum vierten Zeitpunkt t4 dargestellt auszuschalten, wonach er bis zum Zeitpunkt taus ausläuft.

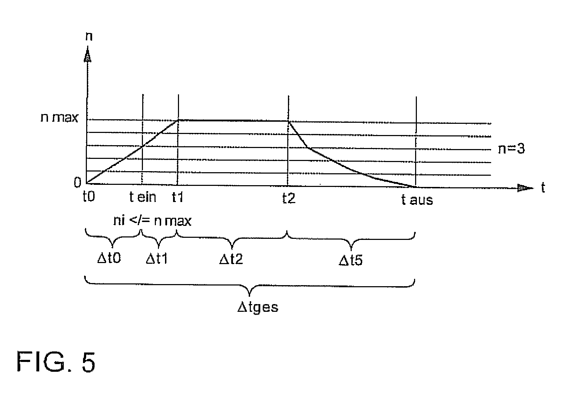

Figur 5 zeigt noch eine erfindungsgemäße Besonderheit, die es ermöglicht, eine Vorlaufzeit Δt0 zwischen den Zeitpunkten t0, dem Vorlaufzeitpunkt und dem Einschaltzeitpunkt tein vorzusehen, wobei selbstverständlich die eigentliche Einschaltung wie in den Figur 1 bis 4 beschrieben bereits zum Zeitpunkt t0 stattfindet.

Der Vorlaufzeitpunkt Δt0 beginnt zum Zeitpunkt t0 mit Betätigung eines Türkontaktes, so dass der Anwender zum Zeitpunkt, auf den er sich auf den Klimasitz setzt, bereits einen vorklimatisierten Sitz vorfindet.

Die weitere Darstellung in Figur 5 und das zugehörige Laufzeitverhalten ist nur beispielhaft und kann selbstverständlich mit allen beschriebenen Ausführungsvarianten gemäß der Darstellung der Figuren 1 bis 4 und Ansprüchen 1 bis 4 verknüpft werden.

### BEZUGSZEICHENLISTE

- t0: Vorlaufzeitpunkt
- tein: Einschaltzeitpunkt
- t1: erster Zeitpunkt
- t2: zweiter Zeitpunkt
- t3: dritter Zeitpunkt
- t4: vierter Zeitpunkt
- taus: Auszeitpunkt
- Δt0: Vorlaufzeitraum
- Δt1: Anlaufzeitraum
- Δt2: zweite Laufzeitraum
- Δt3: dritte Laufzeitraum - Reduzierungszeitraum -
- Δt4: vierte Laufzeitraum
- Δt5: Auslaufzeitraum
- ni: Drehzahl i (i=0, 1, 2, 3, 4, 5)
- n max: Maximaldrehzahl
- nred: reduzierte Drehzahl
- ni = f(TAnsaug): Drehzahl in Abhängigkeit der Ansaugtemperatur
- Δt2 = f(TAnsaug): zweiter Laufzeitraum in Abhängigkeit der Ansaugtemperatur

## Patentansprüche

1. Ventilator, insbesondere für einen Klimasitz in einem Kraftfahrzeug, dessen Gesamtlaufzeit (Δtges) einen Anlaufzeitraum (Δt1), einen Laufzeitraum (Δt2) und einen Auslaufzeitraum (Δt5) umfasst, wobei die Gesamtlaufzeit (Δtges) über einen Ein/AusSchalter bestimmbar ist,
**dadurch gekennzeichnet, dass**
das zeitliche Ende (taus) der bestimmbaren Gesamtlaufzeit (Δtges) steuerbar ist,
• durch automatische Ausschaltung des Ventilators aus einer festgelegten maximalen Drehzahl (n max) nach dem vorgebbaren Laufzeitraum (Δt2) zu einem zweiten Zeitpunkt (t2) oder
• durch automatische Ausschaltung des Ventilators aus einer ansaugtemperaturabhängigen Drehzahl (n=3) nach dem vorgebbaren Laufzeitraum (Δt2) zu einem zweiten Zeitpunkt (t2), die während des Anlaufzeitraumes (Δt1) des Ventilators in Abhängigkeit der Ansaugtemperatur des Ventilators (ni=f(TAnsaug)) durch eine Drehzahlregelung (ni) erreicht wird.

2. Ventilator, insbesondere für einen Klimasitz in einem Kraftfahrzeug, dessen Gesamtlaufzeit (Δtges) einen Anlaufzeitraum (Δt1), einen zweiten Laufzeitraum (Δt2), einen Reduzierungszeitraum (Δt3), einen vierten Laufzeitraum (Δt4) und einen Auslaufzeitraum (Δt5) umfasst, wobei die Gesamtlaufzeit (Δtges) über einen Ein/AusSchalter bestimmbar ist,
**dadurch gekennzeichnet, dass**
das zeitliche Ende (taus) der bestimmbaren Gesamtlaufzeit steuerbar ist,
• durch manuelle oder automatische Ausschaltung des Ventilators zu einem vierten Zeitpunkt (t4) aus einer reduzierten Drehzahl (nred; n=3) nach dem vierten Laufzeitraum (Δt4), die in dem Reduzierungszeitraum (Δt3) aus einer für den zweiten Laufzeitraum (Δt2) festgelegten maximalen Drehzahl (n max) auf die vorgebbare Drehzahl (nred; n=3) im vierten Laufzeitraum (Δt4) durch eine Drehzahlregelung (ni) reduziert worden ist, oder
• durch manuelle oder automatische Ausschaltung des Ventilators zu einem vierten Zeitpunkt (t4) aus einer ansaugtemperaturabhängigen Drehzahl (nred; n=1) nach dem vierten Laufzeitraum (Δt4), die in dem Reduzierungszeitraum (Δt3) aus einer in dem zweiten Laufzeitraum (Δt2) des Ventilators in Abhängigkeit der Ansaugtemperatur des Ventilators (ni=f(TAnsaug)) temperaturabhängig erreichten Drehzahl (n=2) durch eine Drehzahlregelung (ni) auf die vorgebbare Drehzahl (nred; n=1) reduziert worden ist.

3. Ventilator, insbesondere für einen Klimasitz in einem Kraftfahrzeug, dessen Gesamtlaufzeit (Δtges) einen Anlaufzeitraum (Δt1), einen zweiten Laufzeitraum (Δt2), einen Reduzierungszeitraum (Δt3), einen vierten Laufzeitraum (Δt4) und einen Auslaufzeitraum (Δt5) umfasst, wobei die Gesamtlaufzeit (Δtges) über ein als Ein/AusSchalter dienendes und die Drehzahl (ni) vorwählbares Drehzahlregelungselement bestimmbar ist,
**dadurch gekennzeichnet, dass**
das zeitliche Ende (taus) der bestimmbaren Gesamtlaufzeit (Δtges) steuerbar ist,
• durch manuelle oder automatische Ausschaltung des Ventilators zu einem vierten Zeitpunkt (t4) aus einer vorgebbaren automatisch reduzierten Drehzahl (nred; n=2, n=3) nach dem vierten Laufzeitraum (Δt4), die in dem Reduzierungszeitraum (Δt3) in Abhängigkeit der Ansaugtemperatur des Ventilators (ni=f(TAnsaug)) und nach einer ebenfalls in Abhängigkeit der Ansaugtemperatur des Ventilators (ni=f(TAnsaug)) für den zweiten Laufzeitraum (Δt2) automatisch festgelegten Länge durch eine Drehzahlregelung (ni) bereits auf die vorgebbare Drehzahl (nred; n=2, n=3) automatisch reduziert worden ist.

4. Ventilator nach Anspruch 1 oder 2 oder 3,
**dadurch gekennzeichnet, dass**
der zeitliche Beginn der bestimmbaren Gesamtlaufzeit (Δtges) - die Aktivierung insbesondere eines Klimasitzes - durch Betätigung eines Türkontaktes zu einem Vorlaufzeitpunkt (t0) erfolgt und somit eine vor der bestimmbaren Gesamtlaufzeit (Δtges) liegende Vorlaufzeit (Δto) ausbildbar ist.

5. Klimasitz mit einem Steuergerät, in dem ein Gesamtlaufzeitverhalten zur Ansteuerung eines Ventilators nach den Ansprüchen 1 bis 4 abgelegt ist.

## Claims

1. Fan, in particular for a climate-controlled seat in a motor vehicle, the total running time (Δtges) of which comprises a starting time period (Δt1), a running time period (Δt2) and a run-out time period (Δt5), wherein the total running time (Δtges) can be determined by means of an on/off switch,
**characterized in that**
the chronological end (taus) of the total running time (Δtges) which can be determined can be controlled,
• by automatically switching off the fan from a defined maximum rotational speed (n max) after the predefinable running time period (Δt2) at a second point in time (t2) or
• by automatically switching off the fan from an intake-temperature-dependent rotational speed (n=3) after the predefinable running time period (Δt2) at a second point in time (t2), which is reached during the starting time period (Δt1) of the fan by means of a rotational speed controller (ni) as a function of the intake temperature of the fan (ni=f(TAnsaug)).

2. Fan, in particular for a climate-controlled seat in a motor vehicle, the total running time (Δtges) of which comprises a starting time period (Δt1), a second running time period (Δt2), a reduction time period (Δt3), a fourth running time period (Δt4) and a run-out time period (Δt5), wherein the total running time (Δtges) can be determined by means of an on/off switch, **characterized in that**
the chronological end (taus) of the total running time which can be determined can be controlled,
• by manually or automatically switching off the fan at a fourth point in time (t4) from a reduced rotational speed (nred; n=3) after the fourth running time period (Δt4) which has been reduced in the reduction time period (Δt3) from a maximum rotational speed (n max) defined for the second running time period (Δt2) to the predefinable rotational speed (nred; n=3) in the fourth running time period (Δt4) by means of a rotational speed controller (ni), or
• by manually or automatically switching off the fan at a fourth point in time (t4) from an intake-temperature-dependent rotational speed (nred; n=1) after the fourth running time period (Δt4), which rotational speed (nred; n=1) has been reduced in the reduction time period (Δt3) from a rotational speed (n=2) achieved in a temperature-dependent manner in the second time period (Δt2) of the fan as a function of the intake temperature of the fan (ni=f(TAnsaug)) to the predefinable rotational speed (nred; n=1) by means of a rotational speed controller (ni) .

3. Fan, in particular for a climate-controlled seat in a motor vehicle, the total running time (Δtges) of which comprises a starting time period (Δt1), a second running time period (Δt2), a reduction time period (Δt3), a fourth running time period (Δt4) and a run-out time period (Δt5), wherein the total running time (Δtges) can be determined by means of a rotational speed control element which serves as an on/off switch and can preselect the rotational speed (ni),
**characterized in that**
the chronological end (taus) of the total running time (Δtges) which can be determined can be controlled,
• by manually or automatically switching off the fan at a fourth point in time (t4) from a predefinable, automatically reduced rotational speed (nred; n=2, n=3 after the fourth running time period (Δt4), which rotational speed (nred; n=2, n=3) has already been automatically reduced in the reduction time period (Δt3) to the predefinable rotational speed (nred; n=2, n=3) by a rotational speed controller (ni) as a function of the intake temperature of the fan (ni=f(TAnsaug)) and after a length which has also been automatically defined as a function of the intake temperature of the fan (ni=f(TAnsaug)) for the second running time period (Δt2).

4. Fan according to Claim 1 or 2 or 3,
**characterized in that**
the chronological start of the total running time (Δtges) which can be determined - the activation, in particular, of a climate-controlled seat - occurs through activation of a door contact at a pre-running point in time (t0), and therefore a pre-running time (Δtσ) which is just before the predefinable total running time (Δtges) can be formed.

5. Climate-controlled seat having a control unit in which a total running time behaviour for the actuation of a fan according to Claims 1 to 4 is stored.

## Revendications

1. Ventilateur, notamment pour un siège climatisé dans un véhicule automobile, dont le temps de fonctionnement total (Δtges) inclut un intervalle de temps de démarrage (Δt1), un intervalle de temps de fonctionnement (Δt2) et un intervalle de temps d'arrêt (Δt5), le temps de fonctionnement total (Δtges) pouvant être défini par le biais d'un interrupteur marche/arrét,
**caractérisé en ce que**
la fin chronologique (taus) du temps de fonctionnement total (Δtges) pouvant être défini peut être commandée
* par une mise à l'arrêt automatique du ventilateur à partir d'une vitesse de rotation maximale (n max) définie après l'intervalle de temps de fonctionnement (Δt2) pouvant être prédéfini à un deuxième instant (t2) ou
* par une mise à l'arrêt automatique du ventilateur à partir d'une vitesse de rotation dépendante de la température d'aspiration (n=3) après l'intervalle de temps de fonctionnement (Δt2) pouvant être prédéfini à un deuxième instant (t2), qui est atteinte pendant l'intervalle de temps de démarrage (Δt1) du ventilateur en fonction de la température d'aspiration du ventilateur (ni = f(TAnsaug)) par une régulation de la vitesse de rotation (ni).

2. Ventilateur, notamment pour un siège climatisé dans un véhicule automobile, dont le temps de fonctionnement total (Δtges) inclut un intervalle de temps de démarrage (Δt1), un deuxième intervalle de temps de fonctionnement (Δt2), un intervalle de temps de réduction (Δt3), un quatrième intervalle de temps de fonctionnement (Δt4) et un intervalle de temps d'arrêt (Δt5), le temps de fonctionnement total (Δtges) pouvant être défini par le biais d'un interrupteur marche/arrêt,
**caractérisé en ce que**
la chronologique (taus) du temps de fonctionnement total pouvant être défini peut être commandée
* par une mise à l'arrêt manuelle ou automatique du ventilateur à un quatrième instant (t4) à partir d'une vitesse de rotation réduite (nred ; n=3) après le quatrième intervalle de temps de fonctionnement (Δt4), laquelle a été réduite dans l'intervalle de temps de réduction (Δt3) à partir d'une vitesse de rotation maximale (n max) définie pour le deuxième intervalle de temps de fonctionnement (Δt2) à la vitesse de rotation (nred ; n=3) pouvant être prédéfinie dans le quatrième intervalle de temps de fonctionnement (Δt4) par une régulation de la vitesse de rotation (ni), ou
* par une mise à l'arrêt manuelle ou automatique du ventilateur à un quatrième instant (t4) à partir d'une vitesse de rotation dépendante de la température d'aspiration (nred ; n=1) après le quatrième intervalle de temps de fonctionnement (Δt4), laquelle a été réduite dans l'intervalle de temps de réduction (Δt3) à partir d'une vitesse de rotation (n=2) atteinte dépendant de la température dans le deuxième intervalle de temps (Δt2) du ventilateur en fonction de la température d'aspiration du ventilateur (ni=f(TAnsaug)) à la vitesse de rotation (nred ; n=1) pouvant être prédéfinie par une régulation de la vitesse de rotation (ni).

3. Ventilateur, notamment pour un siège climatisé dans un véhicule automobile, dont le temps de fonctionnement total (Δtges) inclut un intervalle de temps de démarrage (Δt1), un deuxième intervalle de temps de fonctionnement (Δt2), un intervalle de temps de réduction (Δt3), un quatrième intervalle de temps de fonctionnement (Δt4) et un intervalle de temps d'arrêt (Δt5), le temps de fonctionnement total (Δtges) pouvant être défini par le biais d'un élément de régulation de la vitesse de rotation servant d'interrupteur marche/arrêt et permettant de présélectionner la vitesse de rotation (ni),
**caractérisé en ce que**
la chronologique (taus) du temps de fonctionnement total (Δtges) pouvant être défini peut être commandée
* par une mise à l'arrêt manuelle ou automatique du ventilateur à un quatrième instant (t4) à partir d'une vitesse de rotation réduite automatiquement (nred ; n=2, n=3) pouvant être prédéfinie après le quatrième intervalle de temps de fonctionnement (Δt4), laquelle a été déjà réduite automatiquement dans l'intervalle de temps de réduction (Δt3) en fonction de la température d'aspiration du ventilateur (ni = f(TAnsaug)) et après une durée définie automatiquement, elle aussi en fonction de la température d'aspiration du ventilateur (ni = f(TAnsaug)), pour le deuxième intervalle de temps de fonctionnement (Δt2) à la vitesse de rotation (nred ; n=2, n=3) pouvant être prédéfinie par une régulation de la vitesse de rotation (ni).

4. Ventilateur selon la revendication 1 ou 2 ou 3, caractérisé que le début chronologique du temps de fonctionnement total (Δtges) pouvant être défini, l'activation notamment d'un siège climatisé, a lieu par l'actionnement d'un contact de portière à un instant à l'avance (t0) et un temps de préparation (Δt0) se trouvant avant le temps de fonctionnement total (Δtges) pouvant être défini peut ainsi être formé.

5. Siège climatisé équipé d'un contrôleur dans lequel est stocké un régime de temps de fonctionnement total destiné à commander un ventilateur selon l'une des revendications 1 à 4.
